# EUROPEAN PATENT APPLICATION

(11) **EP 4 454 899 A1**
(43) Date of publication of application: **30.10.2024**
(21) Application number: 22910702.4
(22) Date of filing: 18.11.2022
(51) Int. Cl.: B41M 5/26, B41M 5/323, B41M 5/337, B41M 5/40

(54) **DISPLAY MEDIUM AND LAMINATE**

(30) Priority: 22.12.2021 JP 2021208807
(71) Applicant: Sony Group Corporation, Tokyo 108-0075 (JP)
(72) Inventor: MIZUNO, Hiroshi, Tokyo 108-0075 (JP); TEJIMA, Aya, Tokyo 108-0075 (JP); OISHI, Yuki, Tokyo 108-0075 (JP)
(74) Representative: D Young & Co LLP
(86) International application number: PCT/JP2022/042899
(87) International publication number: WO 2023/119984

(57) **Abstract**

Provided is a display medium configured to allow for intended drawing.

The display medium includes a first recording layer capable of performing recording with a first laser beam having a first peak wavelength and a second recording layer capable of performing recording with a second laser beam having a second peak wavelength. The first recording layer and the second recording layer employ different recording methods.

## Description

### [Technical Field]

The present disclosure relates to a display medium and a laminate including the display medium.

### [Background Art]

In recent years, display media including a first recording layer and a second recording layer that employ different recording methods have been under consideration. For example, PTL 1 describes a laminate including laminated films tinted with pigments of cyan (C), magenta (M), and yellow (Y) and a near-infrared laser marking layer for grayscale complementation.

### [Citation List]

### [Patent Literature]

[PTL 1]
PCT Patent Publication No. WO2019/129527

### [Summary]

### [Technical Problem]

In a case where, for example, a laser marking sheet and a full-color laser drawing sheet are used as the first recording layer and the second recording layer, the intended drawing cannot be performed in some cases as the conditions of drawing with a laser beam are identical for both sheets.

It is an object of the present disclosure to provide a display medium configured to allow for intended drawing and a laminate including the display medium.

### [Solution to Problem]

In order to solve the problem described above, according to the present disclosure, there is provided a display medium including a first recording layer capable of performing recording with a first laser beam having a first peak wavelength and a second recording layer capable of performing recording with a second laser beam having a second peak wavelength. The first recording layer and the second recording layer employ different recording methods.

According to the present disclosure, there is provided a laminate including the display medium of the present disclosure.

### [Brief Description of Drawings]

[FIG. 1]

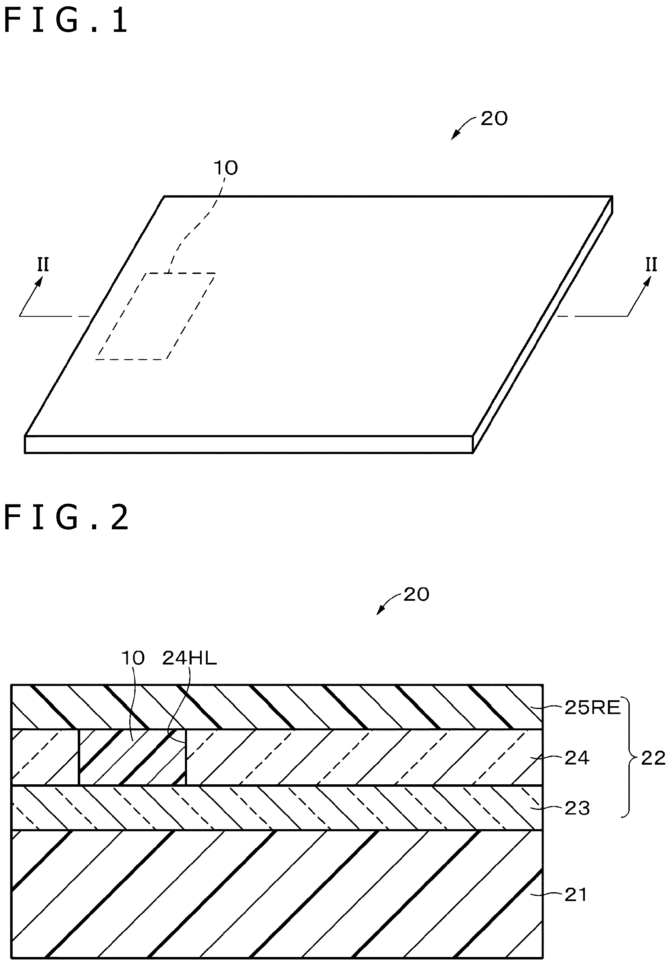

   FIG. 1 is a perspective view of a laminate according to a first embodiment of the present disclosure.
[FIG. 2]
   FIG. 2 is a sectional view along line II-II of FIG. 1.
[FIG. 3]

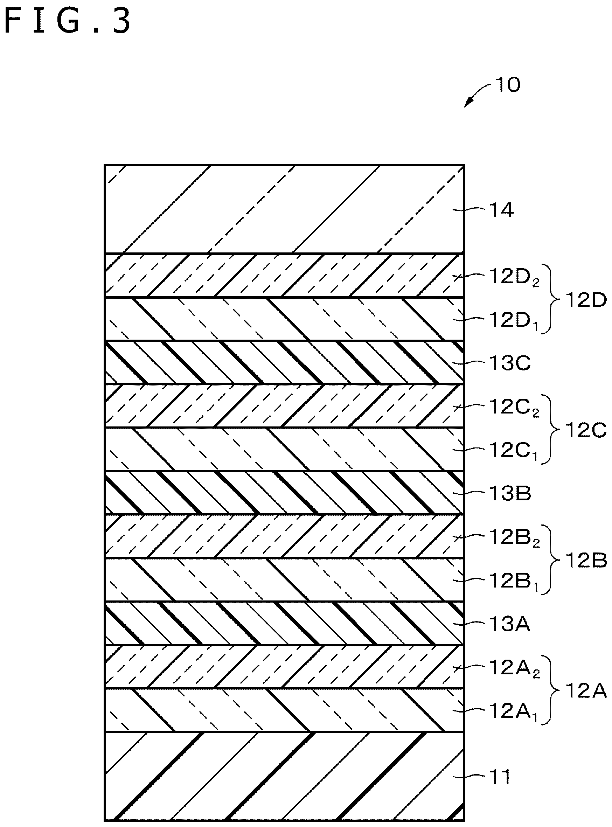

   FIG. 3 is a sectional view of a color display section.
[FIG. 4]

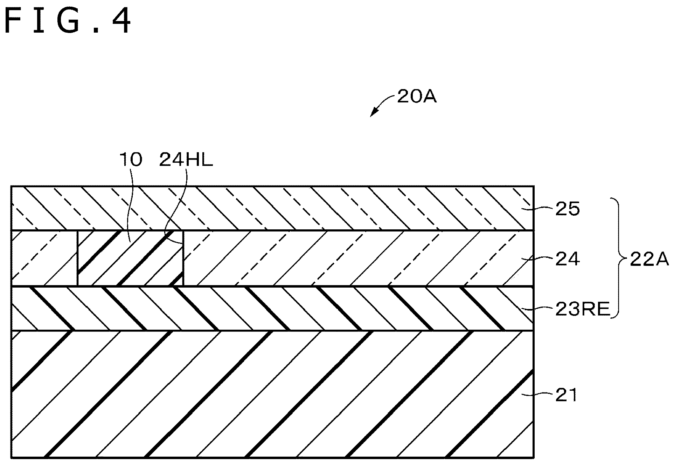

   FIG. 4 is a sectional view of a laminate according to a second embodiment of the present disclosure.
[FIG. 5]

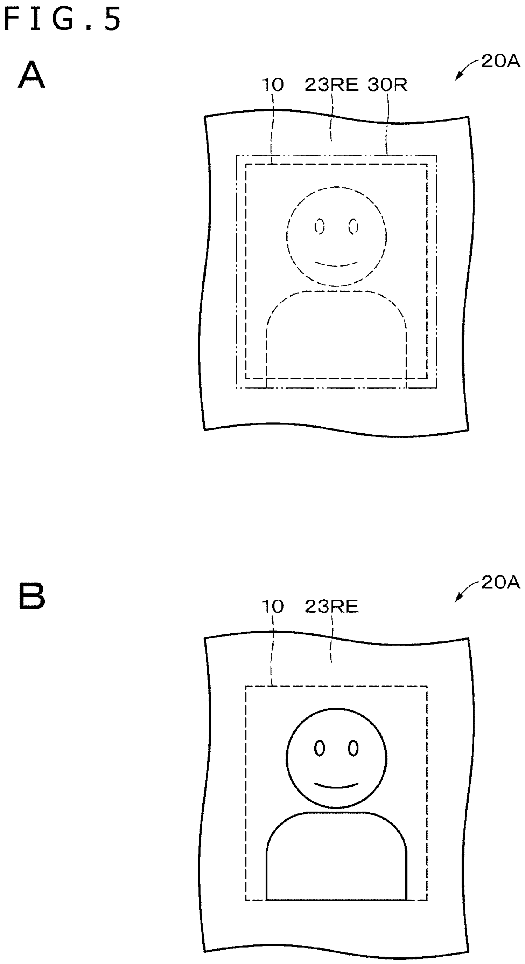

   FIG. 5A and FIG. 5B are views illustrating image drawing on the laminate according to the second embodiment of the present disclosure.
[FIG. 6]

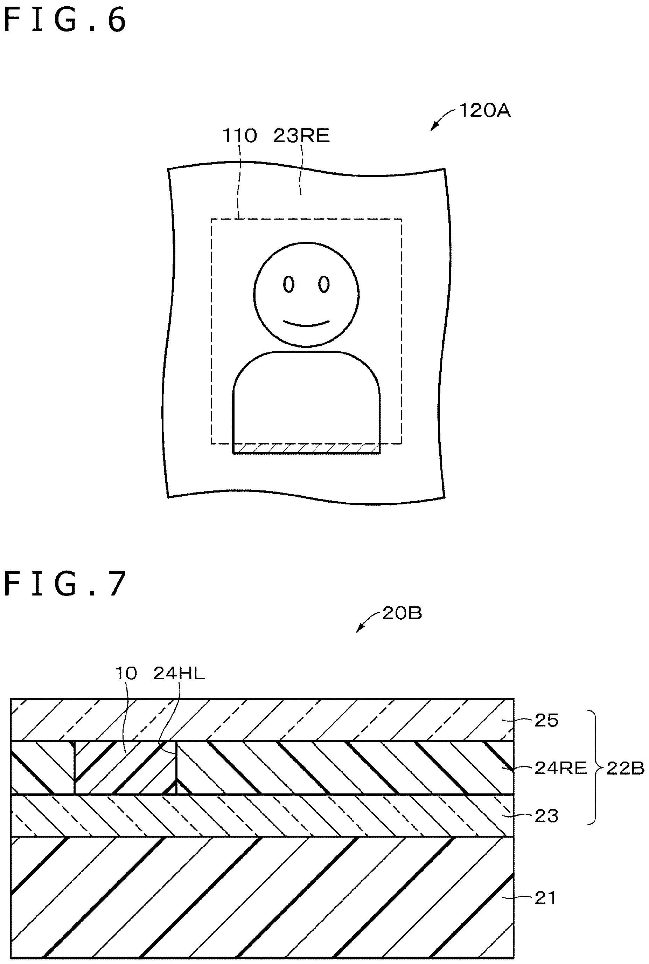

   FIG. 6 is a view illustrating image drawing on a laminate.
[FIG. 7]
   FIG. 7 is a sectional view of a laminate according to Modified Example 1.
[FIG. 8]

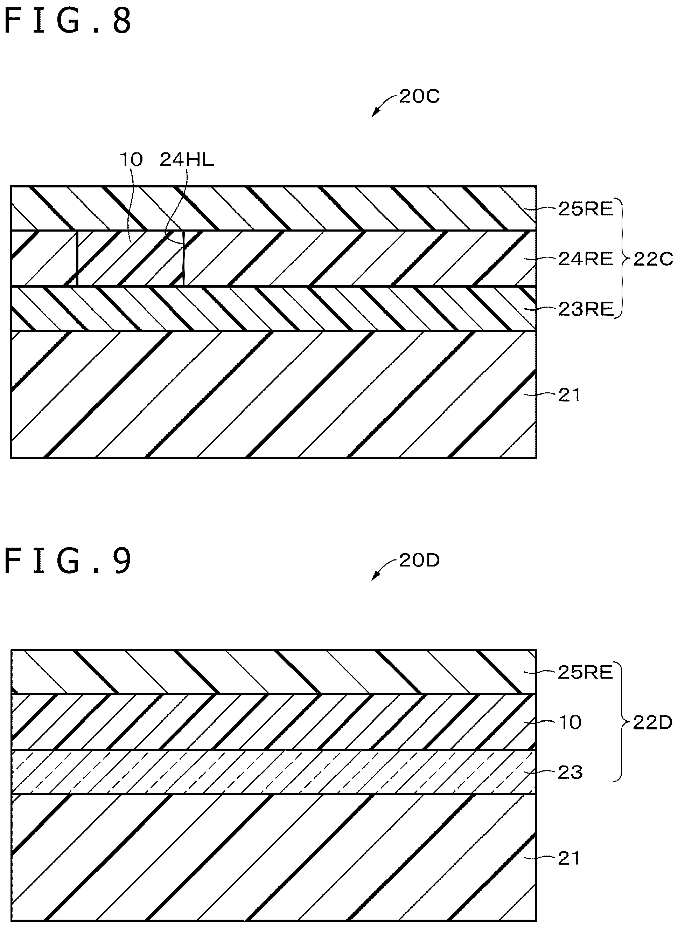

   FIG. 8 is a sectional view of a laminate according to Modified Example 2.
[FIG. 9]
   FIG. 9 is a sectional view of a laminate according to Modified Example 3.
[FIG. 10]

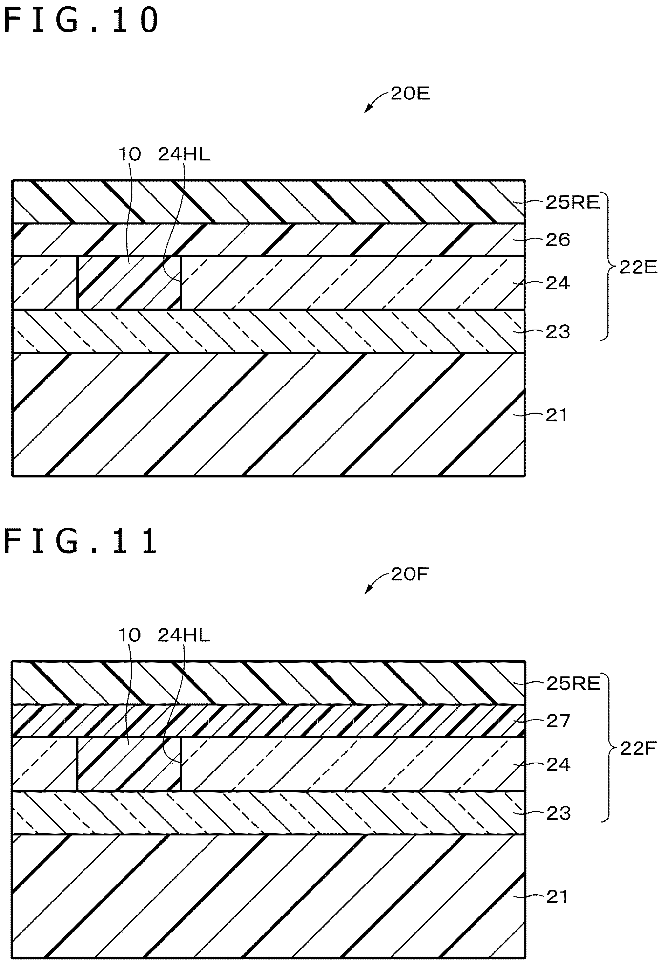

   FIG. 10 is a sectional view of a laminate according to Modified Example 4.
[FIG. 11]
   FIG. 11 is a sectional view of a laminate according to Modified Example 5.
[FIG. 12]

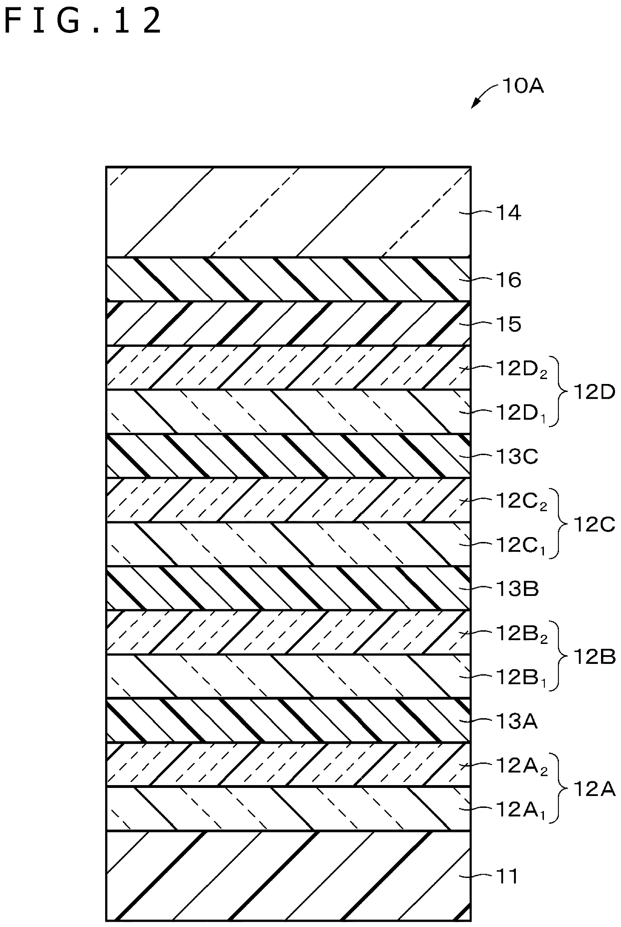

   FIG. 12 is a sectional view of a color display section according to Modified Example 6.
[FIG. 13]

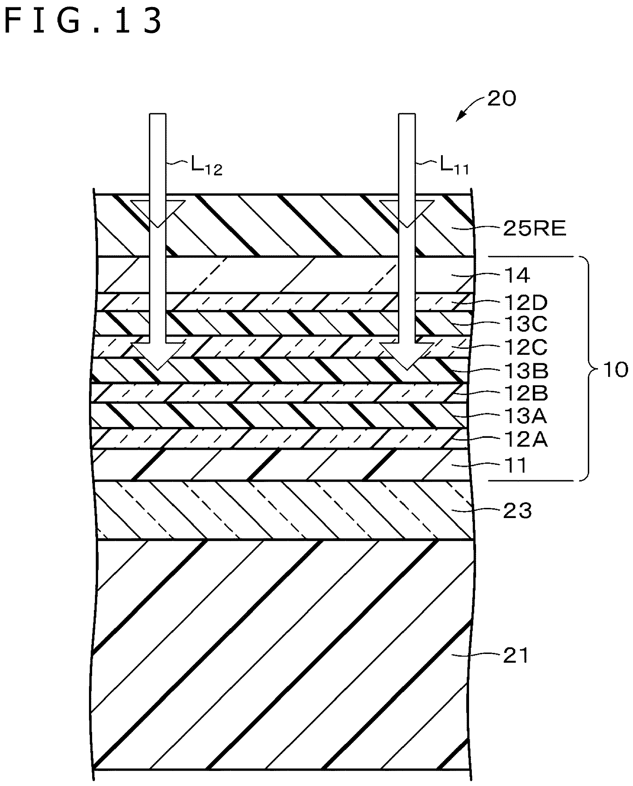

   FIG. 13 is a sectional view of a laminate according to Example 1.
[FIG. 14]

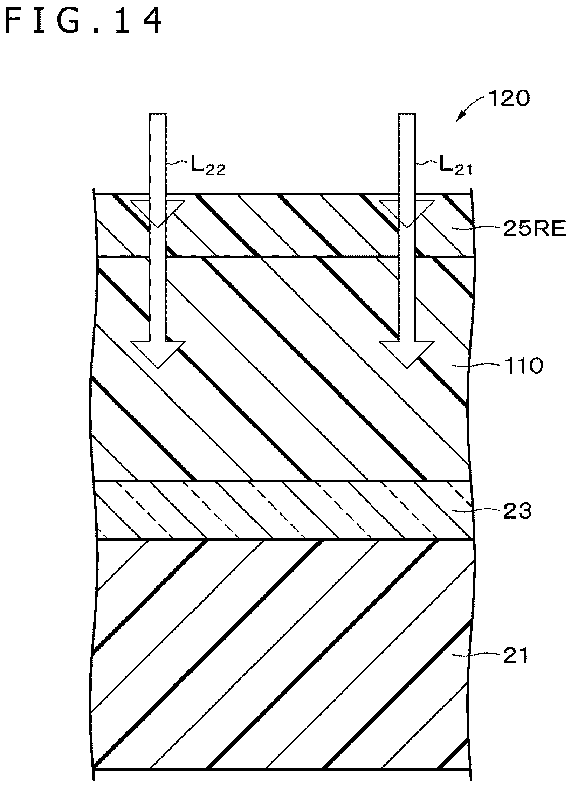

   FIG. 14 is a sectional view of a laminate according to Reference Example 1.

### [Description of Embodiments]

Embodiments of the present disclosure are described in the following order with reference to the drawings. Note that, in all figures for the following embodiments, identical or corresponding parts are denoted by identical reference signs.
1 First Embodiment (Example of Laminate)
   1.1 Configuration of Laminate
   1.2 Manufacturing Method for Laminate
   1.3 Drawing Method for Laminate
   1.4 Actions and Effects
2 Second Embodiment (Example of Laminate)
   2.1 Configuration of Laminate
   2.2 Actions and Effects
3 Modified Examples
4 Example and Reference Example

### <1 First Embodiment>

### [1.1 Configuration of Laminate]

FIG. 1 is a perspective view of a laminate 20 according to a first embodiment of the present disclosure. FIG. 2 is a sectional view along line II-II of FIG. 1. The laminate 20 includes a base material 21 and a display medium 22 in sequence. The laminate 20 may be a card such as a security card, a financial settlement card (for example, a credit card, a cash card, or the like), an ID card (for example, an employee ID card, a membership card, a student ID card, or the like), or a personal transaction card (for example, a prepaid card, a point card, or the like). The laminate 20 may be a sheet forming a booklet such as a passport. The laminate 20 may be a housing for an electronic device or the like.

### (Base Material 21)

The base material 21 is a support configured to support the display medium 22. The base material 21 may be a card, a sheet, paper, a housing, or the like. The base material 21 may have a color such as a white color. The base material 21 may have, for example, patterns, drawings, photographs, characters, or combinations of two or more of them (hereinafter referred to as "patterns or the like") printed on one main surface on the side on which the display medium 22 is provided.

The base material 21 contains, for example, plastic. The base material 21 may contain at least one kind selected from the group including, for example, coloring agents, antistatic agents, flame retardants, and surface modifiers, as needed.

The plastic includes at least one kind selected from the group including, for example, ester resins, amide resins, olefin resins, vinyl resins, acrylic resins, imide resins, styrene resins, engineering plastics, and the like. In a case where the base material 21 contains two or more types of resins, the two or more types of resins may be mixed, copolymerized, or laminated.

The ester resins include at least one kind selected from the group including, for example, polyethylene terephthalate (PET) resins, polybutylene terephthalate (PBT) resins, polyethylene naphthalate (PEN) resins, polyethylene terephthalate-isophthalate copolymer resins, terephthalic acid-cyclohexanedimethanol-ethylene glycol copolymer resins, and the like. The amide resins include at least one kind selected from the group including, for example, nylon 6 resins, nylon 66 resins, nylon 610 resins, and the like. The olefin resins include at least one kind selected from the group including, for example, polyethylene (PE) resins, polypropylene (PP) resins, polymethylpentene (PMP) resins, and the like. The vinyl resins include, for example, polyvinyl chloride (PVC) resins.

The acrylic resins include at least one kind selected from the group including, for example, polyacrylate resins, polymethacrylate resins, polymethyl methacrylate (PMMA) resins, and the like. The imide resins include at least one kind selected from the group including, for example, polyimide (PI) resins, polyamideimide (PAI) resins, polyetherimide (PEI) resins, and the like. The styrene resins include at least one kind selected from the group including, for example, polystyrene (PS) resins, high-impact polystyrene resins, acrylonitrile-styrene resins (AS resins), acrylonitrile-butadiene-styrene resins (ABS resins), and the like. The engineering plastics include at least one kind selected from the group including, for example, polycarbonate (PC) resins, polyarylate (PAR) resins, polysulfone (PSF) resins, polyethersulfone (PES) resins, polyphenylene ether (PPE) resins, polyphenylene sulfide (PPS) resins, polyetherketone (PEK) resins, polyetheretherketone (PEEK) resins, polyphenylene oxide (PPO) resins, polyether sulfite resins, and the like.

### (Display Medium 22)

The display medium 22 includes, on the base material 21, an under layer 23, an intermediate layer 24 including a color display section 10, and a recording layer 25RE in sequence. The base material 21 and the under layer 23 are fused or bonded to each other by an adhesive. The under layer 23 and the intermediate layer 24 are fused or bonded to each other by an adhesive. The under layer 23 and the color display section 10 are fused or bonded to each other by an adhesive. The intermediate layer 24 and the recording layer 25RE are fused or bonded to each other by an adhesive. The color display section 10 and the recording layer 25RE are fused or bonded to each other by an adhesive.

### (Under Layer 23)

The under layer 23 is provided between the base material 21 and the display medium 22. The under layer 23 may have transparency to visible light. As materials for the under layer 23, materials similar to those for the base material 21 can be exemplified. Patterns or the like may be printed on the under layer 23.

### (Intermediate Layer 24)

The intermediate layer 24 is provided between the under layer 23 and the recording layer 25RE. The intermediate layer 24 has an accommodation section 24HL for accommodating the color display section 10. The accommodation section 24HL is provided in a part of the plane of the intermediate layer 24. The accommodation section 24HL is a through hole penetrating the intermediate layer 24 in the thickness direction. The intermediate layer 24 is a spacer for preventing the formation of steps by the color display section 10 when the color display section 10 is sandwiched between the base material 21 and the recording layer 25RE. The intermediate layer 24 has a thickness substantially identical to that of the color display section 10 and covers a region of one of the main surfaces of the under layer 23 other than a region in which the color display section 10 is provided.

The intermediate layer 24 has a film shape. The intermediate layer 24 may have transparency to visible light. As materials for the intermediate layer 24, materials similar to those for the base material 21 can be exemplified.

### (Recording Layer 25RE)

The recording layer 25RE is provided on the intermediate layer 24 and the color display section 10 and covers the intermediate layer 24 and the color display section 10. The recording layer 25RE is an example of a first recording layer. The recording layer 25RE is configured to allow for the drawing of monochrome images. More specifically, the recording layer 25RE is configured to allow for recording with a first laser beam having a first peak wavelength λ₁. The recording layer 25RE is preferably a laser marking layer.

The lower limit value of the first peak wavelength λ₁ is, for example, 1,000 nm or more. The upper limit value of the first peak wavelength λ₁ is, for example, 1,100 nm or less. Specifically, the first peak wavelength λ₁ is, for example, approximately 1,064 nm. As laser devices that can emit the first laser beam, for example, YAG laser devices, YVO4 laser devices, or CO₂ laser devices can be used.

The recording layer 25RE may have a film shape. The recording layer 25RE may have transparency to visible light in the initial state before recording. The laser marking layer may be a known laser marking sheet. The laser marking layer is configured to allow for laser marking by at least one method of the following methods (1) to (5), for example.
(1) A method in which a resin material is foamed to cause the resin material to develop color
(2) A method in which a laser beam-absorbing additive is added to a resin material and the additive itself is caused to develop color
(3) A method in which a laser beam-absorbing additive is added to a resin material and the additive is caused to generate heat, thereby carbonizing a portion of the resin material around the additive to cause the portion to develop color
(4) A method in which the surface of a resin layer is etched by laser irradiation and the change in surface state is utilized
(5) A method in which a resin material colored in black or a deep color is irradiated with a laser beam to decolor the resin material (expose the base color of the resin material) through the sublimation (decomposition) of the coloring agent (carbon black), thereby achieving marking

The laser marking layer contains, for example, a photothermal conversion agent and a resin material. The resin material includes, for example, a polycarbonate resin. As the photothermal conversion agent, for example, carbon or the like is used.

### (Color Display Section 10)

The color display section 10 is configured to be capable of changing its colored state by the irradiation with a laser beam (external stimulus). With this change in colored state, it is possible to draw a full-color image on the color display section 10. The full-color image may include, for example, a photograph such as a face photograph, patterns, color patterns, or the like, or text such as characters or symbols. The full-color image may include a combination of two or more types of photographs, patterns, color patterns, and text. The color display section 10 and the recording layer 25RE employ different recording methods.

The change in colored state may be a reversible change or an irreversible change. That is, the method of the color display section 10 may be a rewritable method that allows the rewriting of images or the like or a write-once method that allows the one-time writing of images or the like. The change in colored state is preferably an irreversible change from the perspective of tamper-proofing.

FIG. 3 is a sectional view of the color display section 10. The color display section 10 includes a base material 11, an intermediate layer 12A, a recording layer 13A, an intermediate layer 12B, a recording layer 13B, an intermediate layer 12C, a recording layer 13C, an intermediate layer 12D, and a cover layer 14 in sequence. Note that the intermediate layer 12A, the intermediate layer 12D, and the cover layer 14 are provided as needed. Herein, in a case where the intermediate layers 12A, 12B, 12C, and 12D are collectively referred to without specific distinction, the intermediate layers 12A, 12B, 12C, and 12D are sometimes referred to as an "intermediate layer 12." Similarly, in a case where the recording layers 13A, 13B, and 13C are collectively referred to without specific distinction, the recording layers 13A, 13B, and 13C are sometimes referred to as a "recording layer 13." Any one layer freely selected from the recording layers 13A, 13B, and 13C is an example of a second recording layer, and the remaining two layers are examples of third and fourth recording layers. In the following, an example in which the recording layer 13A is the second recording layer and the recording layers 13B and 13C are the third and fourth recording layers is described.

### (Base Material 11)

The base material 11 supports the intermediate layer 12A, the recording layer 13A, the intermediate layer 12B, the recording layer 13B, the intermediate layer 12C, the recording layer 13C, the intermediate layer 12D, and the cover layer 14. The base material 11 preferably contains a material that has excellent heat resistance and excellent dimensional stability in the plane direction. The base material 11 may have either transparency or non-transparency to visible light. Herein, visible light refers to light in a wavelength range of 360 nm or more to 780 nm or less. The base material 11 may have a predetermined color such as a white color. The base material 11 has, for example, a plate shape or a film shape. In the present disclosure, the term "film" is defined to include a sheet.

The base material 11 may have, for example, rigidity or flexibility. In a case where the base material 11 has flexibility, the flexible color display section 10 can be achieved. As the base material 11 with rigidity, wafers, glass substrates, or the like can be used, for example. As the base material 11 with flexibility, flexible glass, films, paper, or the like can be used, for example.

The base material 11 contains at least one kind selected from the group including, for example, inorganic materials, metal materials, polymer materials, and the like. The inorganic materials include at least one kind selected from the group including, for example, silicon (Si), silicon oxide (SiO_{X}), silicon nitride (SiN_{X}), aluminum oxide (AlO_{X}), and the like. The silicon oxide includes at least one kind selected from the group including, for example, glass, spin-on glass (SOG), and the like. The metal materials include at least one kind selected from the group including, for example, aluminum (Al), nickel (Ni), stainless steel, and the like. The polymer materials include at least one kind selected from the group including, for example, polycarbonate (PC) resins, polyethylene terephthalate (PET) resins, polyethylene naphthalate (PEN) resins, polyether ether ketone (PEEK) resins, polyvinyl chloride (PVC) resins, and the like.

Note that a reflective layer (not illustrated) may be provided on at least one of a first surface and a second surface of the base material 11, or the base material 11 itself may have a function as a reflective layer. The base material 11 with such a configuration makes a more vivid color display possible.

### (Recording Layers 13A, 13B, and 13C)

The recording layers 13A, 13B, and 13C in a recorded state are in a color-developed state, and the recording layers 13A, 13B, and 13C in an unrecorded state are in a decolored state. The recording layers 13A, 13B, and 13C can change from the decolored state to the color-developed state by the irradiation with a laser beam. The decolored state may be a state that allows the passage of the above-mentioned laser beam and visible light.

The recording layers 13A, 13B, and 13C can exhibit hues different from each other in the color-developed state. Specifically, the recording layer 13A can exhibit a magenta color in the color-developed state. The recording layer 13B can exhibit a cyan color in the color-developed state. The recording layer 13C can exhibit a yellow color in the color-developed state. The magenta color, the cyan color, and the yellow color are examples of a first primary color, a second primary color, and a third primary color, respectively. The first primary color, the second primary color, and the third primary color may be the three primary colors of color. The first primary color, the second primary color, and the third primary color may be colors other than the magenta color, the cyan color, and the yellow color. The laser beam capable of changing the recording layer 13A to the color-developed state, the laser beam capable of changing the recording layer 13B to the color-developed state, and the laser beam capable of changing the recording layer 13C to the color-developed state have peak wavelengths different from each other.

The thicknesses of the recording layers 13A, 13B, and 13C are each preferably 1 um or more and 20 um or less, more preferably 2 um or more and 15 um or less. When the thicknesses of the recording layers 13A, 13B, and 13C are each 1 um or more, the developed color density can be improved. Meanwhile, when the thicknesses of the recording layers 13A, 13B, and 13C are each 20 um or less, the increase in the amount of heat utilization of the recording layers 13A, 13B, and 13C can be prevented, thereby preventing the deterioration of color developability.

The recording layer 13A is configured to allow for recording with a second laser beam having a second peak wavelength λ₂. The recording layer 13A contains a first coloring compound with electron-donating properties, a first developer with electron-accepting properties, and a first photothermal conversion agent. It is preferable for the recording layer 13A to further contain a first matrix resin.

The recording layer 13B is configured to allow for recording with a third laser beam having a third peak wavelength λ₃. The recording layer 13B contains a second coloring compound with electron-donating properties, a second developer with electron-accepting properties, and a second photothermal conversion agent. It is preferable for the recording layer 13B to further contain a second matrix resin.

The recording layer 13C is configured to allow for recording with a fourth laser beam having a fourth peak wavelength λ₄. The recording layer 13C contains a third coloring compound with electron-donating properties, a third developer with electron-accepting properties, and a third photothermal conversion agent. It is preferable for the recording layer 13C to further contain a third matrix resin.

The second laser beam, the third laser beam, and the fourth laser beam are preferably near-infrared laser beams. The second peak wavelength λ₂, the third peak wavelength λ₃, and the fourth peak wavelength λ₄ are preferably within the near-infrared region. The upper limit values of the second peak wavelength λ₂, the third peak wavelength λ₃, and the fourth peak wavelength λ₄ are, for example, less than 1,000 nm, preferably 915 nm or less. The lower limit values of the second peak wavelength λ₂, the third peak wavelength λ₃, and the fourth peak wavelength λ₄ are, for example, 760 nm or more.

The second peak wavelength λ₂, the third peak wavelength λ₃, and the fourth peak wavelength λ₄ are different from each other. This allows independent recording to be performed on the recording layer 13A, the recording layer 13B, and the recording layer 13C. The first peak wavelength λ₁, the second peak wavelength λ₂, the third peak wavelength λ₃, and the fourth peak wavelength λ₄ preferably have a relation of λ₄ < λ₃ < λ₂ < λ₁. This allows independent recording to be performed on the color display section 10 and the recording layer 25RE.

### (First, Second, and Third Coloring Compounds)

The first, second, and third coloring compounds can develop color by reacting with the first, second, and third developers, respectively. The first, second, and third coloring compounds can exhibit hues different from each other in the color-developed state. Specifically, the first coloring compound can exhibit a magenta color in the color-developed state. The second coloring compound can exhibit a cyan color in the color-developed state. The third coloring compound can exhibit a yellow color in the color-developed state.

The first, second, and third coloring compounds are, for example, leuco dyes. The leuco dyes develop color when the lactone ring within the molecule reacts with an acid and the lactone ring enters a ring open state. The leuco dyes may lose color when the lactone ring in the ring open state reacts with a base to enter a ring closed state. The leuco dyes may be, for example, existing dyes for heat-sensitive paper.

The first, second, and third coloring compounds are not particularly limitative and can be appropriately selected depending on the purpose. The first, second, and third coloring compounds include at least one kind selected from the group including, for example, fluoran compounds, triphenylmethane phthalide compounds, azaphthalide compounds, phenothiazine compounds, leuco auramine compounds, indolinophthalide compounds, and the like. In addition to these, the first, second, and third coloring compounds may include at least one kind selected from the group including, for example, 2-anilino-3-methyl-6-diethylaminofluoran, 2-anilino-3-methyl-6-di (n-butylamino)fluoran, 2-anilino-3-methyl-6-(N-n-propyl-N-methylamino)fluoran, 2-anilino-3-methyl-6-(N-isopropyl-N-methylamino)fluoran, 2-anilino-3-methyl-6-(N-isobutyl-N-methylamino)fluoran, 2-anilino-3-methyl-6-(N-n-amyl-N-methylamino)fluoran, 2-anilino-3-methyl-6-(N-sec-butyl-N-methylamino)fluoran, 2-anilino-3-methyl-6-(N-n-amyl-N-ethylamino)fluoran, 2-anilino-3-methyl-6-(N-iso-amyl-N-ethylamino)fluoran, 2-anilino-3-methyl-6-(N-n-propyl-N-isopropylamino)fluoran, 2-anilino-3-methyl-6-(N-cyclohexyl-N-methylamino)fluoran, 2-anilino-3-methyl-6-(N-ethyl-p-toluidino)fluoran, 2-anilino-3-methyl-6-(N-methyl-p-toluidino)fluoran, 2-(m-trichloromethylanilino)-3-methyl-6-diethylaminofluoran, 2-(m-trifluoromethylanilino)-3-methyl-6-diethylaminofluoran, 2-(m-trichloromethylanilino)-3-methyl-6-(N-cyclohexyl-N-methylamino)fluoran, 2-(2,4-dimethylanilino)-3-methyl-6-diethylaminofluoran, 2-(N-ethyl-p-toluidino)-3-methyl-6-(N-ethylanilino)fluoran, 2-(N-ethyl-p-toluidino)-3-methyl-6-(N-propyl-p-toluidino)fluoran, 2-anilino-6-(N-n-hexyl-N-ethylamino)fluoran, 2-(o-chloroanilino)-6-diethylaminofluoran, 2-(o-chloroanilino)-6-dibutylaminofluoran, 2-(m-trifluoromethylanilino)-6-diethylaminofluoran, 2,3-dimethyl-6-dimethylaminofluoran, 3-methyl-6-(N-ethyl-p-toluidino)fluoran, 2-chloro-6-diethylaminofluoran, 2-bromo-6-diethylaminofluoran, 2-chloro-6-dipropylaminofluoran, 3-chloro-6-cyclohexylaminofluoran, 3-bromo-6-cyclohexylaminofluoran, 2-chloro-6-(N-ethyl-N-isoamylamino)fluoran, 2-chloro-3-methyl-6-diethylaminofluoran, 2-anilino-3-chloro-6-diethylaminofluoran, 2-(o-chloroanilino)-3-chloro-6-cyclohexylaminofluoran, 2-(m-trifluoromethylanilino)-3-chloro-6-diethylaminofluoran, 2-(2,3-dichloroanilino)-3-chloro-6-diethylaminofluoran, 1,2-benzo-6-diethylaminofluoran, 3-diethylamino-6-(m-trifluoromethylanilino)fluoran, 3-(1-ethyl-2-methylindole-3-yl)-3-(2-ethoxy-4-diethylaminophenyl)-4-azaphthalide, 3-(1-ethyl-2-methylindole-3-yl)-3-(2-ethoxy-4-diethylaminophenyl)-7-azaphthalide, 3-(1-octyl-2-methylindole-3-yl)-3-(2-ethoxy-4-diethylaminophenyl)-4-azaphthalide, 3-(1-ethyl-2-methylindole-3-yl)-3-(2-methyl-4-diethylaminophenyl)-4-azaphthalide, 3-(1-ethyl-2-methylindole-3-yl)-3-(2-methyl-4-diethylaminophenyl)-7-azaphthalide, 3-(1-ethyl-2-methylindole-3-yl)-3-(4-diethylaminophenyl)-4-azaphthalide, 3-(1-ethyl-2-methylindole-3-yl)-3-(4-N-n-amyl-N-methylaminophenyl)-4-azaphthalide, 3-(1-methyl-2-methylindole-3-yl)-3-(2-hexyloxy-4-diethylaminophenyl)-4-azaphthalide, 3,3-bis (2-ethoxy-4-diethylaminophenyl)-4-azaphthalide, 3,3-bis (2-ethoxy-4-diethylaminophenyl)-7-azaphthalide, 2-(p-acetylanilino)-6-(N-n-amyl-N-n-butylamino)fluoran, 2-benzylamino-6-(N-ethyl-p-toluidino)fluoran, 2-benzylamino-6-(N-methyl-2,4-dimethylanilino)fluoran, 2-benzylamino-6-(N-ethyl-2,4-dimethylanilino)fluoran, 2-benzylamino-6-(N-methyl-p-toluidino)fluoran, 2-benzylamino-6-(N-ethyl-p-toluidino)fluoran, 2-(di-p-methylbenzylamino)-6-(N-ethyl-p-toluidino)fluoran, 2-(α-phenylethylamino)-6-(N-ethyl-p-toluidino)fluoran, 2-methylamino-6-(N-methylanilino)fluoran, 2-methylamino-6-(N-ethylanilino)fluoran, 2-methylamino-6-(N-propylanilino)fluoran, 2-ethylamino-6-(N-methyl-p-toluidino)fluoran, 2-methylamino-6-(N-methyl-2,4-dimethylanilino)fluoran, 2-ethylamino-6-(N-ethyl-2,4-dimethylanilino)fluoran, 2-dimethylamino-6-(N-methylanilino)fluoran, 2-dimethylamino-6-(N-ethylanilino)fluoran, 2-diethylamino-6-(N-methyl-p-toluidino)fluoran, 2-diethylamino-6-(N-ethyl-p-toluidino)fluoran, 2-dipropylamino-6-(N-methylanilino)fluoran, 2-dipropylamino-6-(N-ethylanilino)fluoran, 2-amino-6-(N-methylanilino)fluoran, 2-amino-6-(N-ethylanilino)fluoran, 2-amino-6-(N-propylanilino)fluoran, 2-amino-6-(N-methyl-p-toluidino)fluoran, 2-amino-6-(N-ethyl-p-toluidino)fluoran, 2-amino-6-(N-propyl-p-toluidino)fluoran, 2-amino-6-(N-methyl-p-ethylanilino)fluoran, 2-amino-6-(N-ethyl-p-ethylanilino)fluoran, 2-amino-6-(N-propyl-p-ethylanilino)fluoran, 2-amino-6-(N-methyl-2,4-dimethylanilino)fluoran, 2-amino-6-(N-ethyl-2,4-dimethylanilino)fluoran, 2-amino-6-(N-propyl-2,4-dimethylanilino)fluoran, 2-amino-6-(N-methyl-p-chloroanilino)fluoran, 2-amino-6-(N-ethyl-p-chloroanilino)fluoran, 2-amino-6-(N-propyl-p-chloroanilino)fluoran, 1,2-benzo-6-(N-ethyl-N-isoamylamino)fluoran, 1,2-benzo-6-dibutylaminofluoran, 1,2-benzo-6-(N-methyl-N-cyclohexylamino)fluoran, 1,2-benzo-6-(N-ethyl-N-toluidino)fluoran, and the like.

### (First, Second, and Third Developers)

The first, second, and third developers can cause the first, second, and third coloring compounds in the decolored state to develop color, respectively. The types of the first, second, and third developers may be identical, or the types of the first, second, and third developers may be different from each other. The first, second, and third developers are compounds each containing a base with electron-accepting properties within the molecule. The electron-accepting portions of the first, second, and third developers react with the respective lactone rings of the first, second, and third coloring compounds to cause the lactone rings to open, thereby allowing the first, second, and third coloring compounds to develop color. The first, second, and third developers contain at least one kind selected from the group including, for example, phenol derivatives, salicylic acid derivatives, urea derivatives, and the like.

Specifically, for example, the developer contains a compound represented by Formula (1) below. 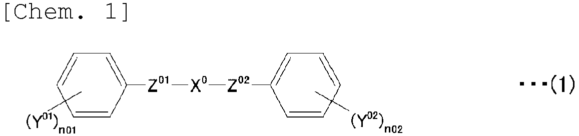 (Note that, in Formula (1), X⁰ is a divalent group including at least one benzene ring. Y⁰¹ and Y⁰² are each independently a monovalent group. n01 and n02 are each independently any integer ranging from 0 to 5. In a case where n01 is any integer ranging from 2 to 5, Y⁰¹s may be identical to or different from each other. In a case where n02 is any integer ranging from 2 to 5, Y⁰²s may be identical to or different from each other. Z⁰¹ and Z⁰² are each independently a hydrogen-bonding group.)

With X° including at least one benzene ring, the melting point can be high compared to a case where X° is an aliphatic hydrocarbon group (for example, a normal alkyl chain), and hence, the developed color retention characteristics during high-temperature and high-humidity storage (hereinafter referred to as "high-temperature and high-humidity storage characteristics") can be improved. X° preferably includes at least two benzene rings from the perspective of improving high-temperature and high-humidity storage characteristics and heat resistance. The high-temperature and high-humidity storage characteristics are storage characteristics under an environment at 80°C and 60% RH, for example. With improved heat resistance, the resistance of the color display section 10 to severe processes (for example, hot pressing or integral molding using molten resins or the like) is improved. In a case where X° includes at least two benzene rings, the at least two benzene rings may be condensed. For example, naphthalene, anthracene, or the like may be used.

Since Z⁰¹ and Z⁰² are each independently a hydrogen-bonding group, the developers are likely to be present in a state of being gathered to some extent through hydrogen bonding, and the stability of the developer within the recording layer 13 is thus improved. Herein, the term "hydrogen-bonding group" means a functional group including atoms that can form hydrogen bonds with atoms present in other functional groups, other compounds, or the like.

The developer preferably contains a compound represented by Formula (2) below. 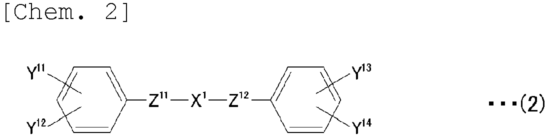 (Note that, in Formula (2), X¹ is a divalent group including at least one benzene ring. Y¹¹, Y¹², Y¹³, and Y¹⁴ are each independently a monovalent group. Z¹¹ and Z¹² are each independently a hydrogen-bonding group.)

With X¹ including at least one benzene ring, the melting point can be high compared to a case where X¹ is an aliphatic hydrocarbon group (for example, a normal alkyl chain), and hence, the high-temperature and high-humidity storage characteristics can be improved. X¹ preferably includes at least two benzene rings from the perspective of improving high-temperature and high-humidity storage characteristics and heat resistance. In a case where X¹ includes at least two benzene rings, the at least two benzene rings may be condensed. For example, naphthalene, anthracene, or the like may be used.

Since Z¹¹ and Z¹² are each independently a hydrogen-bonding group, the developers are likely to be present in a state of being gathered to some extent through hydrogen bonding, and the stability of the developer within the recording layer 13 is thus improved.

In a case where Formula (1) and Formula (2) include a hydrocarbon group, the hydrocarbon group in question is a generic term for groups including carbon (C) and hydrogen (H) and may be a saturated hydrocarbon group or an unsaturated hydrocarbon group. The saturated hydrocarbon group is an aliphatic hydrocarbon group having no carbon-carbon multiple bond, and the unsaturated hydrocarbon group is an aliphatic hydrocarbon group having a carbon-carbon multiple bond (a carbon-carbon double bond or a carbon-carbon triple bond).

In a case where Formula (1) and Formula (2) include a hydrocarbon group, the hydrocarbon group in question may be a chain or may include one or two or more rings. The chain may be a linear chain or a branched chain having one or two or more side chains or the like.

### (X° and X¹ Each Including Single Benzene Ring)

X° in Formula (1) and X¹ in Formula (2) are each, for example, a divalent group including a single benzene ring. The divalent group in question is represented by Formula (3) below, for example. 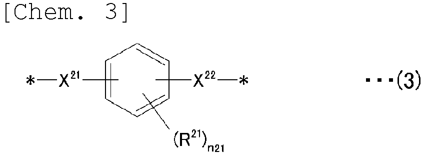 (Note that, in Formula (3), X²¹ may or may not be provided, and in a case where X²¹ is provided, X²¹ is a divalent group. X²² may or may not be provided, and in a case where X²² is provided, X²² is a divalent group. R²¹ is a monovalent group. n21 is any integer ranging from 0 to 4. In a case where n21 is any integer ranging from 2 to 4, R²¹s may be identical to or different from each other. The symbol "*" represents a bonding portion.)

In Formula (3), the bonding positions of X²¹ and X²² to the benzene ring are not limitative. That is, the bonding positions of X²¹ and X²² to the benzene ring may be any of ortho positions, meta positions, and para positions.

The above-mentioned divalent group including a single benzene ring is preferably represented by Formula (4) below from the perspective of improving high-temperature and high-humidity storage characteristics. 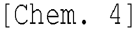 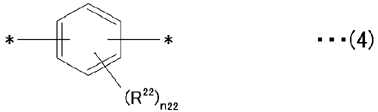 (Note that, in Formula (4), R²² is a monovalent group. n22 is any integer ranging from 0 to 4. In a case where n22 is any integer ranging from 2 to 4, R²²s may be identical to or different from each other. The symbol "*" represents a bonding portion.)

In a case where X° in Formula (1) is a divalent group including a single benzene ring, in Formula (4), the bonding positions of Z⁰¹ and Z⁰² to the benzene ring are not limitative. That is, the bonding positions of Z⁰¹ and Z⁰² to the benzene ring may be any of ortho positions, meta positions, and para positions.

In a case where X¹ in Formula (2) is a divalent group including a single benzene ring, in Formula (4), the bonding positions of Z¹¹ and Z¹² to the benzene ring are not limitative. That is, the bonding positions of Z¹¹ and Z¹² to the benzene ring may be any of ortho positions, meta positions, and para positions.

### (X²¹ and X²²)

It is sufficient if X²¹ and X²² in Formula (3) are each independently a divalent group, and there is no particular limitation. For example, X²¹ and X²² are hydrocarbon groups optionally having substituents. The hydrocarbon groups are preferably chains. When each hydrocarbon group is a chain, the melting point of the developer can be reduced, thereby making it easier for the coloring compound to develop color through the melting of the developer by the irradiation with a laser beam. Among the chain hydrocarbon groups, a normal alkyl chain is particularly preferable from the perspective of reducing the melting point of the developer.

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

In a case where X²¹ and X²² in Formula (3) are normal alkyl groups, the number of carbon atoms of each normal alkyl group in question is preferably 8 or less, more preferably 6 or less, still more preferably 5 or less, particularly preferably 3 or less from the perspective of high-temperature storage stability. It is considered that, when the number of carbon atoms of the normal alkyl group is 8 or less, since the length of the normal alkyl group is short, a thermal disturbance is less likely to occur in the developer during high-temperature storage, and that the site that has interacted with the coloring compound such as a leuco dye during color development is less likely to come off. Thus, the coloring compound such as a leuco dye is less likely to lose color during high-temperature storage, leading to an improvement in high-temperature storage stability.

As the substituent optionally included in the hydrocarbon group, halogen groups (for example, fluorine groups), alkyl groups having halogen groups (for example, fluorine groups), or the like can be cited, for example. The hydrocarbon group optionally having a substituent may be a hydrocarbon group in which a part of carbon of the hydrocarbon group (for example, a part of carbon included in the main chain of the hydrocarbon group) is substituted with an element such as oxygen.

### (R21)

It is sufficient if R²¹ in Formula (3) is a monovalent group, and there is no particular limitation. For example, R²¹ is a halogen group or a hydrocarbon group optionally having a substituent.

The halogen group is, for example, a fluorine group (-F), a chlorine group (-Cl), a bromine group (-Br), or an iodine group (-I).

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

As the substituent optionally included in the hydrocarbon group, halogen groups (for example, fluorine groups), alkyl groups having halogen groups (for example, fluorine groups), or the like can be cited, for example. The hydrocarbon group optionally having a substituent may be a hydrocarbon group in which a part of carbon of the hydrocarbon group (for example, a part of carbon included in the main chain of the hydrocarbon group) is substituted with an element such as oxygen.

### (R²²)

It is sufficient if R²² in Formula (4) is a monovalent group, and there is no particular limitation. For example, R²² is a halogen group or a hydrocarbon group optionally having a substituent. The halogen group and the hydrocarbon group optionally having a substituent are each similar to R²¹ in Formula (3) above.

### (X° and X¹ Each Including Two Benzene Rings)

X° in Formula (1) and X¹ in Formula (2) are each, for example, a divalent group including two benzene rings. The divalent group in question is represented by Formula (5) below, for example. (Note that, in Formula (5), X³¹ may or may not be provided, and in a case where X³¹ is provided, X³¹ is a divalent group. X³² may or may not be provided, and in a case where X³² is provided, X³² is a divalent group. X³³ may or may not be provided, and in a case where X³³ is provided, X³³ is a divalent group. R³¹ and R³² are each independently a monovalent group. n31 and n32 are each independently any integer ranging from 0 to 4. In a case where n31 is any integer ranging from 2 to 4, R³¹s may be identical to or different from each other. In a case where n32 is any integer ranging from 2 to 4, R³²s may be identical to or different from each other. The symbol "*" represents a bonding portion.)

In Formula (5), the bonding positions of X³¹ and X³² to the benzene ring are not limitative. That is, the bonding positions of X³¹ and X³² to the benzene ring may be any of ortho positions, meta positions, and para positions. Similarly, in Formula (5), the bonding positions of X³² and X³³ to the benzene ring are not limitative. That is, the bonding positions of X³² and X³³ to the benzene ring may be any of ortho positions, meta positions, and para positions.

The above-mentioned divalent group including two benzene rings is preferably represented by Formula (6) below from the perspective of improving high-temperature and high-humidity storage characteristics. (Note that, in Formula (6), X³⁴ is a divalent group. R³³ and R³⁴ are each independently a monovalent group. n33 and n34 are each independently any integer ranging from 0 to 4. In a case where n33 is any integer ranging from 2 to 4, R³³s may be identical to or different from each other. In a case where n34 is any integer ranging from 2 to 4, R³⁴s may be identical to or different from each other. The symbol "*" represents a bonding portion.)

In a case where X° in Formula (1) is a divalent group including two benzene rings, in Formula (6), the bonding positions of Z⁰¹ and X³⁴ to the benzene ring are not limitative. That is, the bonding positions of Z⁰¹ and X³⁴ to the benzene ring may be any of ortho positions, meta positions, and para positions. Similarly, in Formula (6), the bonding positions of Z⁰² and X³⁴ to the benzene ring are not limitative. That is, the bonding positions of Z⁰² and X³⁴ to the benzene ring may be any of ortho positions, meta positions, and para positions.

In a case where X¹ in Formula (2) is a divalent group including two benzene rings, in Formula (6), the bonding positions of Z¹¹ and X³⁴ to the benzene ring are not limitative. That is, the bonding positions of Z¹¹ and X³⁴ to the benzene ring may be any of ortho positions, meta positions, and para positions. Similarly, in Formula (6), the bonding positions of Z¹² and X³⁴ to the benzene ring are not limitative. That is, the bonding positions of Z¹² and X³⁴ to the benzene ring may be any of ortho positions, meta positions, and para positions.

### (X³¹, X³², and X³³)

It is sufficient if X³¹, X³², and X³³ in Formula (5) are each independently a divalent group, and there is no particular limitation. For example, X³¹, X³², and X³³ are hydrocarbon groups optionally having substituents. The hydrocarbon groups in question are similar to those of X²¹ and X²² in Formula (3) above.

### (X³⁴)

It is sufficient if X³⁴ in Formula (6) is a divalent group, and there is no particular limitation. For example, X³⁴ is a hydrocarbon group optionally having a substituent. The hydrocarbon group in question is similar to those of X²¹ and X²² in Formula (3) above.

### (R³¹ and R³²)

It is sufficient if R³¹ and R³² in Formula (5) are monovalent groups, and there is no particular limitation. For example, R³¹ and R³² are halogen groups or hydrocarbon groups optionally having substituents. The halogen groups and the hydrocarbon groups optionally having substituents are each similar to those of R²¹ in Formula (3) above.

### (R³³ and R³⁴)

It is sufficient if R³³ and R³⁴ in Formula (6) are monovalent groups, and there is no particular limitation. For example, R³³ and R³⁴ are halogen groups or hydrocarbon groups optionally having substituents. The halogen groups and the hydrocarbon groups optionally having substituents are each similar to those of R²¹ in Formula (3) above.

### (Y⁰¹ and Y⁰²)

Y⁰¹ and Y⁰² in Formula (1) are each independently, for example, a hydrogen group (-H), a hydroxy group (-OH), a halogen group (-X), a carboxy group (-COOH), an ester group (-COOR), or a hydrocarbon group optionally having a substituent.

The halogen group is, for example, a fluorine group (-F), a chlorine group (-Cl), a bromine group (-Br), or an iodine group (-I).

The number of carbon atoms of the hydrocarbon group optionally having a substituent is, for example, 1 or more and 15 or less, 1 or more and 13 or less, 1 or more and 12 or less, 1 or more and 10 or less, 1 or more and 6 or less, or 1 or more and 3 or less.

As the substituent optionally included in the hydrocarbon group, halogen groups (for example, fluorine groups), alkyl groups having halogen groups (for example, fluorine groups), or the like can be cited, for example. The hydrocarbon group optionally having a substituent may be a hydrocarbon group in which a part of carbon of the hydrocarbon group (for example, a part of carbon included in the main chain of the hydrocarbon group) is substituted with an element such as oxygen.

In Formula (1), one of (Y⁰¹)ₙ₀₁s and/or one of (Y⁰²)ₙ₀₂s is preferably a hydroxy group (-OH). When one of (Y⁰¹)ₙ₀₁s and/or one of (Y⁰²)ₙ₀₂s is a hydroxy group (-OH), the display quality and light resistance can be improved.

### (Y¹¹, Y¹², Y¹³, and Y¹⁴)

In Formula (2), the bonding positions of Y¹¹ and Y¹² to the benzene ring are not limitative. That is, the bonding positions of Y¹¹ and Y¹² to the benzene ring may be any of ortho positions, meta positions, and para positions. Similarly, in Formula (2), the bonding positions of Y¹³ and Y¹⁴ to the benzene ring are not limitative either. That is, the bonding positions of Y¹³ and Y¹⁴ to the benzene ring may also be any of ortho positions, meta positions, and para positions. In Formula (2), the bonding positions of Y¹¹ and Y¹² to one of the benzene rings may be identical to or different from the bonding positions of Y¹³ and Y¹⁴ to the other benzene ring.

Y¹¹, Y¹², Y¹³, and Y¹⁴ in Formula (2) are each independently, for example, a hydrogen group (-H), a hydroxy group (-OH), a halogen group, a carboxy group (-COOH), an ester group (-COOR), or a hydrocarbon group optionally having a substituent. The halogen group and the hydrocarbon group optionally having a substituent are each similar to those of Y⁰¹ and Y⁰² in Formula (1) above.

In Formula (2), Y¹¹ and/or Y¹³ is preferably a hydroxy group (-OH) . When Y¹¹ and/or Y¹³ is a hydroxy group (-OH), the display quality and light resistance can be improved.

### (Z⁰¹ and Z⁰²)

Z⁰¹ and Z⁰² in Formula (1) are each independently, for example, a urea bond (-NHCONH-), an amide bond (-NHCO- or -OCHN-), or a hydrazide bond (-NHCOCONH-). Z⁰¹ and Z⁰² are preferably urea bonds from the perspective of improving high-temperature and high-humidity storage characteristics. In a case where Z⁰¹ is an amide bond, the nitrogen contained in the amide bond in question may be bonded to benzene, or the carbon contained in the amide bond in question may be bonded to benzene. In a case where Z⁰² is an amide bond, the nitrogen contained in the amide bond in question may be bonded to benzene, or the carbon contained in the amide bond in question may be bonded to benzene.

### (Z¹¹ and Z¹²)

Z¹¹ and Z¹² in Formula (2) are each independently, for example, a urea bond (-NHCONH-), an amide bond (-NHCO- or -OCHN-), or a hydrazide bond (-NHCOCONH-). Z¹¹ and Z¹² are preferably urea bonds from the perspective of improving high-temperature and high-humidity storage characteristics. In a case where Z¹¹ is an amide bond, the nitrogen contained in the amide bond in question may be bonded to benzene, or the carbon contained in the amide bond in question may be bonded to benzene. In a case where Z¹² is an amide bond, the nitrogen contained in the amide bond in question may be bonded to benzene, or the carbon contained in the amide bond in question may be bonded to benzene.

### (Specific Examples of Developer)

A developer in which X° in Formula (1) and X¹ in Formula (2) each include a single benzene ring contains at least one kind selected from the group including, specifically, for example, compounds represented by Formulae (7-1) to (7-6) below.

A developer in which X° in Formula (1) and X¹ in Formula (2) each include two benzene rings contains at least one kind selected from the group including, specifically, for example, compounds represented by Formulae (8-1) to (8-8) below.

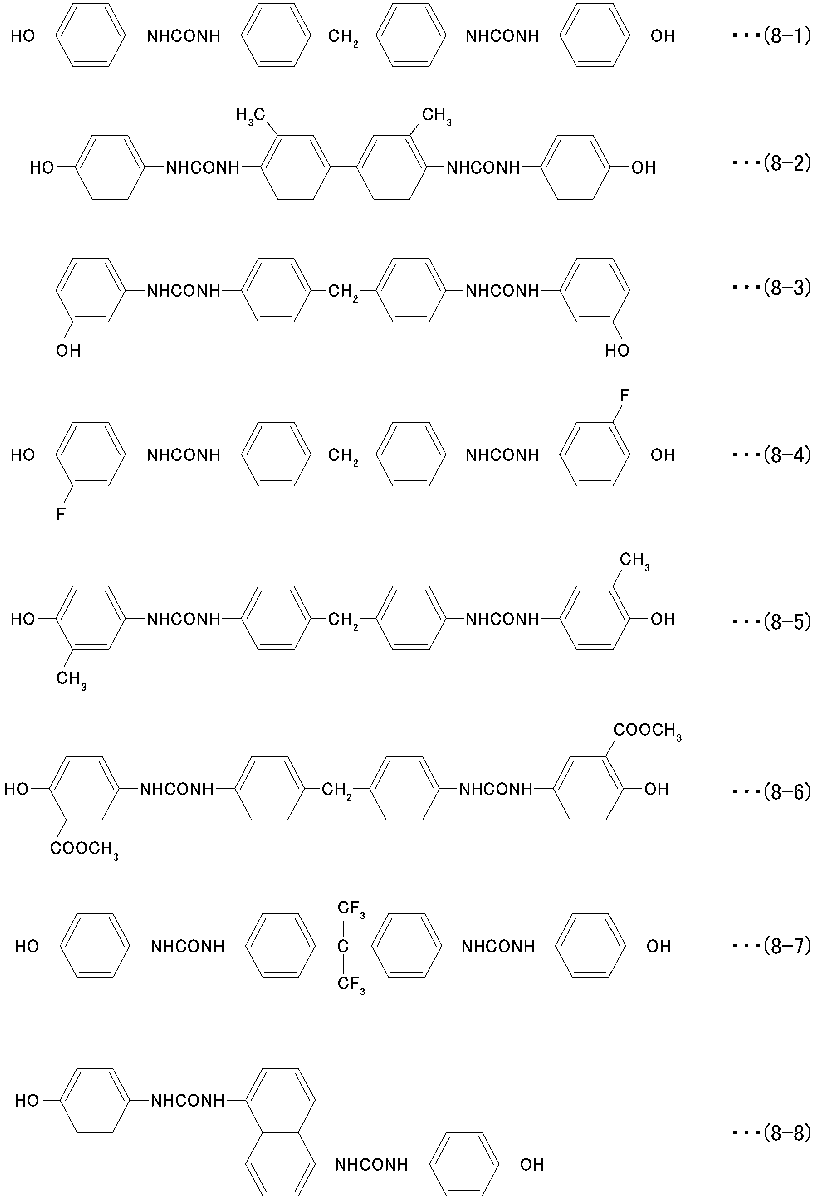

### (First, Second, and Third Photothermal Conversion Agents)

The first, second, and third photothermal conversion agents can absorb light of a predetermined wavelength range, such as the near-infrared region, to generate heat. The first, second, and third photothermal conversion agents have absorption wavelength peaks different from each other. Specifically, the first photothermal conversion agent has an absorption wavelength peak at approximately the wavelength λ₂. The second photothermal conversion agent has an absorption wavelength peak at approximately the wavelength λ₃. The third photothermal conversion agent has an absorption wavelength peak at approximately the wavelength λ₄. The wavelengths λ₂, λ₃, and λ₄ are different from each other. The absorption wavelength peaks are preferably in the near-infrared region. The near-infrared region is, for example, a wavelength range of 700 nm or more to 2,000 nm or less. As described above, with the first, second, and third photothermal conversion agents having absorption wavelength peaks different from each other, the desired layer of the recording layers 13A, 13B, and 13C can selectively be caused to develop color by the irradiation with a laser beam. It is preferable to use, as the first, second, and third photothermal conversion agents, near-infrared absorbing dyes that hardly absorb light in the visible region.

The first, second, and third photothermal conversion agents contain at least one kind selected from the group including, for example, compounds having a phthalocyanine skeleton (phthalocyanine dyes), compounds having a squarylium skeleton (squarylium dyes), inorganic compounds, and the like.

The inorganic compounds include at least one kind selected from the group including, for example, metal complexes such as dithio complexes, diimmonium salts, aminium salts, graphite, carbon black, metal powder particles, metal oxides such as tricobalt tetroxide, iron oxide, chromium oxide, copper oxide, titanium black, and ITO (Indium Tin Oxide), metal nitrides such as niobium nitride, metal carbides such as tantalum carbide, metal sulfides, various magnetic powders, and the like. In addition to these, the inorganic compounds may include compounds having a cyanine skeleton (cyanine dyes) that have excellent light resistance and heat resistance. Note that, here, excellent light resistance refers to that the compound does not decompose when irradiated with light, such as fluorescent light, under the conditions of use, for example. Excellent heat resistance refers to that, when the compound is deposited together with a high-polymer material and stored at 150°C for 30 minutes, for example, the maximum absorption peak value of the absorption spectrum does not change by 20% or more, for example. Examples of such compounds having a cyanine skeleton include compounds having at least one of the following within the molecule: the counterion of any of SbF₆, PF₆, BF₄, ClO₄, CF₃SO₃, and (CF₃SO₃)₂N, and a methine chain containing a five-membered ring or a six-membered ring. Note that the compound having a cyanine skeleton used for the color display section 10 in the first embodiment preferably has both any of the above-mentioned counterions and such a ring structure as a five-membered ring or a six-membered ring within the methine chain, but as long as the compound has at least one of them, sufficient light resistance and heat resistance are ensured.

### (First, Second, Third Matrix Resins)

The first, second, and third matrix resins preferably have a function as a binder. The first matrix resin is preferably a matrix resin with which the first coloring compound, the first developer, and the first photothermal conversion agent are easily homogeneously dispersed. The second matrix resin is preferably a matrix resin with which the second coloring compound, the second developer, and the second photothermal conversion agent are easily homogeneously dispersed. The third matrix resin is preferably a matrix resin with which the third coloring compound, the third developer, and the third photothermal conversion agent are easily homogeneously dispersed. The types of the first, second, and third matrix resins may be identical, or the types of the first, second, and third matrix resins may be different from each other.

The first, second, and third matrix resins include at least one kind selected from the group including, for example, thermosetting resins, thermoplastic resins, and the like. The first, second, and third matrix resins preferably include polycarbonate resins. With the first, second, and third matrix resins including polycarbonate resins, the light resistance of the base of the color display section 10 can be improved. Here, a polycarbonate resin is resin at least having a carbonate group (-O-(C=O)-O-) as a structural unit in the main chain. Thus, the polycarbonate resins may have other structural units in addition to the carbonate group in the main chain.

Instead of polycarbonate resins or together with polycarbonate resins, the first, second, and third matrix resins may include at least one kind selected from the group including polyvinyl chloride, polyvinyl acetate, vinyl chloride-vinyl acetate copolymers, ethyl cellulose, polystyrene, styrene copolymers, phenoxy resins, polyesters, aromatic polyesters, polyurethane, polyacrylic acid esters, polymethacrylic acid esters, acrylic acid copolymers, maleic acid polymers, polyvinyl alcohol, modified polyvinyl alcohol, hydroxyethyl cellulose, carboxymethyl cellulose, starch, and the like.

### (Additive)

The recording layers 13A, 13B, and 13C may further contain at least one kind of additive selected from the group including sensitizers, ultraviolet absorbers, and the like, as needed. The recording layers 13A, 13B, and 13C preferably contain amine compounds from the perspective of preventing the coloring of the base.

In a case where the recording layers 13A, 13B, and 13C contain amine compounds, the recording layers 13A, 13B, and 13C preferably contain at least one kind of compound selected from the group including epoxy compounds and carbodiimide compounds together with the amine compounds. There is a concern that the reliability of the color development portion during high-temperature and high-humidity storage may decrease when the recording layers 13A, 13B, and 13C contain amine compounds. However, when the recording layers 13A, 13B, and 13C contain at least one kind of compound selected from the group including epoxy compounds and carbodiimide compounds together with amine compounds, the decrease in the reliability of the color development portion during high-temperature and high-humidity storage due to the amine compounds can be prevented.

### (Intermediate Layers 12A, 12B, 12C, and 12D)

The intermediate layer 12A is provided between the base material 11 and the recording layer 13A. The intermediate layer 12A can insulate the base material 11 and the recording layer 13A from each other and prevent the diffusion of constituent materials between the base material 11 and the recording layer 13A. The intermediate layer 12B is provided between the recording layer 13A and the recording layer 13B. The intermediate layer 12B can insulate the recording layer 13A and the recording layer 13B from each other and prevent the diffusion of constituent materials between the recording layer 13A and the recording layer 13B. The intermediate layer 12C is provided between the recording layer 13B and the recording layer 13C. The intermediate layer 12C can insulate the recording layer 13B and the recording layer 13C from each other and prevent the diffusion of constituent materials between the recording layer 13B and the recording layer 13C. The intermediate layer 12D is provided between the recording layer 13C and the cover layer 14. The intermediate layer 12D can insulate the recording layer 13C and the cover layer 14 from each other and prevent the diffusion of constituent materials between the recording layer 13C and the cover layer 14.

The intermediate layer 12A may have transparency or non-transparency to visible light and laser beams used for drawing on the color display section 10. The intermediate layers 12B, 12C, and 12D have transparency to visible light and laser beams used for drawing on the color display section 10.

The thicknesses of the intermediate layers 12A, 12B, 12C, and 12D are each independently preferably 3 um or more and 100 um or less, more preferably 5 um or more and 50 um or less. When the thicknesses of the intermediate layers 12A, 12B, 12C, and 12D are each 3 um or more, a sufficient insulation effect can be obtained, and a sufficient diffusion prevention effect can be obtained. Meanwhile, when the thicknesses of the intermediate layers 12A, 12B, 12C, and 12D are each 50 um or less, the decrease in transparency can be prevented. Further, this can also prevent the decrease in the bending resistance of the color display section 10, thereby reducing the occurrence of defects such as cracks. The thicknesses of the intermediate layers 12A, 12B, 12C, and 12D may be identical or different from each other.

The intermediate layer 12A includes, on the base material 11, an adhesive layer 12A₁ and an ultraviolet curable resin layer 12A₂ in sequence. The adhesive layer 12A₁ bonds the base material 11 to the ultraviolet curable resin layer 12A₂. The adhesive layer 12A₁ may be capable of insulating the base material 11 and the recording layer 13A from each other. The ultraviolet curable resin layer 12A₂ can insulate the base material 11 and the recording layer 13A from each other and prevent the diffusion of constituent materials (for example, the first coloring compound and the like) between the base material 11 and the recording layer 13A.

The intermediate layer 12B includes, on the recording layer 13A, an adhesive layer 12B₁ and an ultraviolet curable resin layer 12B₂ in sequence. The adhesive layer 12B₁ bonds the recording layer 13A to the ultraviolet curable resin layer 12B₂. The adhesive layer 12B₁ may be capable of insulating the recording layer 13A and the recording layer 13B from each other. The ultraviolet curable resin layer 12B₂ can insulate between the recording layer 13A and the recording layer 13B and prevent the diffusion of constituent materials (for example, the first and second coloring compounds and the like) between the recording layer 13A and the recording layer 13B.

The intermediate layer 12C includes, on the recording layer 13B, an adhesive layer 12C₁ and an ultraviolet curable resin layer 12C₂ in sequence. The adhesive layer 12C₁ bonds the recording layer 13B to the ultraviolet curable resin layer 12C₂. The adhesive layer 12C₁ may be capable of insulating the recording layer 13B and the recording layer 13C from each other. The ultraviolet curable resin layer 12C₂ can insulate the recording layer 13B and the recording layer 13C from each other and prevent the diffusion of constituent materials (for example, the second and third coloring compounds and the like) between the recording layer 13B and the recording layer 13C.

The intermediate layer 12D includes, on the recording layer 13C, an adhesive layer 12D₁ and an ultraviolet curable resin layer 12D₂ in sequence. The adhesive layer 12D₁ bonds the recording layer 13C to the ultraviolet curable resin layer 12D₂. The adhesive layer 12D₁ may be capable of insulating the recording layer 13C and the cover layer 14 from each other. The ultraviolet curable resin layer 12D₂ can insulate the recording layer 13C and the cover layer 14 from each other and prevent the diffusion of constituent materials (for example, the third coloring compound and the like) between the recording layer 13C and the cover layer 14.

The adhesive layers 12A₁, 12B₁, 12C₁, and 12D₁ are, for example, double-sided adhesive films such as an OCA (Optical Clear Adhesive).

The ultraviolet curable resin layers 12A₂, 12B₂, 12C₂, and 12D₂ contain an ultraviolet curable resin solidified through a polymerization reaction. More specifically, for example, the ultraviolet curable resin layers 12A₂, 12B₂, 12C₂, and 12D₂ contain a polymer of a polymerizable compound and a polymerization initiator whose structure has been changed by the generation of active species due to external energy (ultraviolet radiation). The ultraviolet curable resin composition includes at least one kind selected from the group including, for example, radical-polymerizable ultraviolet curable resin compositions, cation polymerizable ultraviolet curable resin compositions, and the like. The ultraviolet curable resin composition may include at least one kind selected from the group including sensitizers, fillers, stabilizers, leveling agents, antifoaming agents, viscosity modifiers, and the like, as needed. The ultraviolet curable resin layers 12A₂, 12B₂, 12C₂, and 12D₂ are provided as needed and may not be provided. The ultraviolet curable resin layer 12D₂ may have a function of blocking ultraviolet radiation due to thermal curing.

### [1.2 Manufacturing Method for Laminate]

Now, an example of a manufacturing method for the laminate 20 according to the first embodiment of the present disclosure is described.

First, the intermediate layer 24 is placed on one of the main surfaces of the base material 11, and the color display section 10 is then fitted into the accommodation section 24HL of the intermediate layer 24. Note that the intermediate layer 24 with the color display section 10 fitted into the accommodation section 24HL in advance may be placed on one of the main surfaces of the base material 11. Next, the recording layer 25RE is placed on the intermediate layer 24. Next, the obtained laminate is sandwiched by metal plates and heated and pressurized to thermally fuse the base material 11 to the intermediate layer 24 and fuse the intermediate layer 24 to the recording layer 25RE. The temperature applied to the laminate during thermal fusion is preferably 130°C or more and 200°C or less from the perspective of reducing damage to the color display section 10 and exhibiting a sufficient fusion strength. With this, the desired laminate 20 is obtained.

### [1.3 Drawing Method for Laminate]

In the laminate 20 according to the first embodiment, for example, monochrome patterns or the like can be drawn on the recording layer 25RE as follows.

For example, by a YAG laser device, the first laser beam having the first peak wavelength λ₁ is emitted to the recording layer 25RE. With this, the photothermal conversion agent contained in the recording layer 25RE absorbs the first laser beam to achieve laser marking.

Meanwhile, for example, in a case where the first laser beam having the first peak wavelength λ₁ is emitted to the color display section 10 by a YAG laser device, the color display section 10 is not laser-marked.

In the laminate 20 according to the first embodiment, for example, full-color images can be recorded on the color display section 10 as follows. Here, a case where the recording layers 13A, 13B, and 13C exhibit a cyan color, a magenta color, and a yellow color, respectively, is described as an example.

For example, by a semiconductor laser or the like, infrared radiation having a defined wavelength and a defined power is emitted to the color display section 10 through the recording layer 25RE. Here, in a case where the recording layer 13A is caused to develop color, infrared radiation with the second peak wavelength λ₂ is emitted to the recording layer 13A at an energy level sufficient for the recording layer 13A to reach the color development temperature. With this, the photothermal conversion material contained in the recording layer 13A generates heat, thereby triggering a color reaction (color development reaction) between the coloring compound and the developer, resulting in the development of a cyan color in the irradiated portion. Similarly, in a case where the recording layer 13B is caused to develop color, infrared radiation with the third peak wavelength λ₃ is emitted to the recording layer 13B at an energy level sufficient for the recording layer 13B to reach the color development temperature. In a case where the recording layer 13C is caused to develop color, infrared radiation with the fourth peak wavelength λ₄ is emitted to the recording layer 13C at an energy level sufficient for the recording layer 13C to reach the color development temperature. With this, the photothermal conversion materials contained in the recording layer 13B and the recording layer 13C each generate heat, thereby triggering color reactions between the coloring compounds and the developers, resulting in the development of a magenta color and a yellow color in the respective irradiated portions. In such a way, it is possible to record patterns or the like (for example, full-color patterns or the like) by emitting infrared radiation with the corresponding wavelengths to desired portions.

### [1.4 Actions and Effects]

As described above, in the laminate 20 according to the first embodiment, the recording layer (first recording layer) 25RE is configured to allow for recording with the first laser beam having the first peak wavelength λ₁. Meanwhile, the color display section 10 is configured to allow for recording with the second, third, and fourth laser beams having the second, third, and fourth peak wavelengths λ₂, λ₃, and λ₄, respectively. The first, second, third, and fourth peak wavelengths λ₁, λ₂, λ₃, and λ₄ are set to values different from each other. With this, in performing drawing on the color display section 10 located below the recording layer (first recording layer) 25RE, there is no risk of having a difficulty in performing drawing on the color display section 10 due to unintended drawing on the recording layer (first recording layer) 25RE. Thus, the intended drawing can be performed on the color display section 10.

### <2 Second Embodiment>

### [2.1 Configuration of Laminate]

FIG. 4 is a sectional view of a laminate 20A according to a second embodiment of the present disclosure. The laminate 20A includes a display medium 22A on the base material 21. The display medium 22A is different from the display medium 22 in the first embodiment in including a recording layer 23RE and a resin layer 25 instead of the under layer 23 and the recording layer 25RE (see FIG. 2).

The recording layer 23RE is configured to allow for recording with the first laser beam having the first peak wavelength λ₁. The recording layer 23RE has a configuration similar to that of the recording layer 25RE in the first embodiment. In the second embodiment, the recording layer 23RE is an example of the first recording layer.

The resin layer 25 may have transparency to visible light. The resin layer 25 is, for example, a film. As materials for the resin layer 25, materials similar to those for the base material 21 can be exemplified.

### [2.2 Actions and Effects]

In the laminate 20A according to the second embodiment, the conditions of drawing with a laser beam are different between the color display section 10 and the recording layer 23RE located below the color display section 10. Thus, as illustrated in FIG. 5A, even in a case where a drawing region 30R for the color display section 10 is set to include a portion outside the color display section 10, the recording layer 23RE neither reacts nor develops color in such a portion by the irradiation with a laser beam for drawing on the color display section 10. Thus, as illustrated in FIG. 5B, an image such as a photograph can be drawn only on the color display section 10.

Further, it is possible to perform drawing without any concern about the boundary between the color display section 10 and the recording layer 23RE in the in-plane direction of the laminate 20A on the production line or the like, which contributes to the improvement of throughput and the prevention of decrease in yield.

Meanwhile, as illustrated in FIG. 6, in a laminate 120A including a general full-color laser drawing sheet 110 instead of the color display section 10, the drawing conditions are substantially identical for the full-color laser drawing sheet 110 and the recording layer 23RE located below the full-color laser drawing sheet 110. Thus, in a case where the drawing region 30R for the color display section 10 is set to include a portion outside the color display section 10, the recording layer 23RE reacts and develops color in such a portion by the irradiation with a laser beam for drawing on the color display section 10. Thus, as illustrated in FIG. 6, an image such as a photograph including the portion outside the color display section 10 is drawn. Further, the image of the portion outside the color display section 10 is drawn in a color (for example, a black color) different from that of the color display section 10, for example.

### <3 Modified Examples>

### [Modified Example 1]

FIG. 7 is a sectional view of a laminate 20B according to Modified Example 1. The laminate 20B includes a display medium 22B on the base material 21. The display medium 22B is different from the display medium 22 in the first embodiment in including a recording layer 24RE and the resin layer 25 instead of the intermediate layer 24 and the recording layer 25RE (see FIG. 2).

The color display section 10 and the recording layer 24RE are arranged in the in-plane direction of the display medium 22B. The recording layer 24RE is configured to allow for recording with the first laser beam having the first peak wavelength λ₁. The recording layer 24RE has a configuration similar to that of the recording layer 25RE in the first embodiment. The resin layer 25 is as described in the second embodiment. In Modified Example 1, the recording layer 24RE is an example of the first recording layer.

### [Modified Example 2]

FIG. 8 is a sectional view of a laminate 20C according to Modified Example 2. The laminate 20C includes a display medium 22C on the base material 21. The display medium 22C is different from the display medium 22 in the first embodiment in including the recording layer 23RE and the recording layer 24RE instead of the under layer 23 and the intermediate layer 24 (see FIG. 2). In Modified Example 2, the recording layer 23RE, the recording layer 24RE, and the recording layer 25RE are examples of the first recording layer.

The recording layer 23RE is as described in the second embodiment. The recording layer 24RE is as described in Modified Example 1.

### [Modified Example 3]

FIG. 9 is a sectional view of a laminate 20D according to Modified Example 3. The laminate 20D includes a display medium 22D on the base material 21. The display medium 22D is different from the display medium 22 in the first embodiment in that the intermediate layer 24 is not provided and the color display section 10 covers the entirety of one of the main surfaces of the under layer 23.

### [Modified Example 4]

FIG. 10 is a sectional view of a laminate 20E according to Modified Example 4. The laminate 20E includes a display medium 22E on the base material 21. The display medium 22E is different from the display medium 22 in the first embodiment in including a hologram layer 26 between the intermediate layer 24 including the color display section 10 and the recording layer 25RE. A layer whose appearance can differ depending on the field of view or the placement angle, such as parallax or moire, may be provided instead of the hologram layer 26 or together with the hologram layer 26.

### [Modified Example 5]

FIG. 11 is a sectional view of a laminate 20F according to Modified Example 5. The laminate 20F includes a display medium 22F on the base material 21. The display medium 22F is different from the display medium 22 in the first embodiment in including a UV blocking layer 27 between the intermediate layer 24 including the color display section 10 and the recording layer 25RE. A barrier layer for preventing the diffusion of oxygen, moisture, or the like may be provided instead of the UV blocking layer 27 or together with the UV blocking layer 27.

### [Modified Example 6]

FIG. 12 is a sectional view of a color display section 10A according to Modified Example 6. The color display section 10A is different from the color display section 10 in the first embodiment in including an invisible layer 15. The invisible layer 15 may be a layer containing coloring compounds visible in the near-infrared region or the ultraviolet region. The invisible layer 15 may be provided between the intermediate layer 12D and the cover layer 14. A bonding layer 16 may be provided between the invisible layer 15 and the cover layer 14.

### (Other Modified Examples)

Although the embodiments and Modified Examples of the present disclosure have been specifically described above, the present disclosure is not limited to the embodiments and Modified Examples described above, and various modifications based on the technical ideas of the present disclosure are possible.

For example, the configurations, methods, processes, shapes, materials, numerical values, and the like given in the embodiments and Modified Examples described above are merely examples, and configurations, methods, processes, shapes, materials, numerical values, and the like different from these may be used as needed.

The configurations, methods, processes, shapes, materials, numerical values, and the like of the embodiments and Modified Examples described above can be combined with each other without departing from the gist of the present disclosure.

In the numerical value ranges described step by step in the embodiments and Modified Examples described above, the upper limit value or the lower limit value of a numerical value range at a certain stage may be replaced with the upper limit value or the lower limit value of a numerical value range at another stage.

The materials exemplified in the embodiments and Modified Examples described above can be used alone or in combination of two or more types of them unless otherwise specifically stated.

In addition, the present disclosure can also adopt the following configurations.
(1) A display medium including:
   a first recording layer capable of performing recording with a first laser beam having a first peak wavelength; and
   a second recording layer capable of performing recording with a second laser beam having a second peak wavelength,
   in which the first recording layer and the second recording layer employ different recording methods.
(2) The display medium according to (1), in which the first peak wavelength is 1,000 nm or more.
(3) The display medium according to (1), in which the second peak wavelength is less than 1,000 nm.
(4) The display medium according to any one of (1) to (3), in which the first recording layer is provided above the second recording layer.
(5) The display medium according to any one of (1) to (3), in which the first recording layer is provided below the second recording layer.
(6) The display medium according to any one of (1) to (3), in which the first recording layer and the second recording layer are arranged in an in-plane direction of the display medium.
(7) The display medium according to any one of (1) to (3), in which the first recording layer is provided above the second recording layer, below the second recording layer, and on a side of the second recording layer.
(8) The display medium according to any one of (1) to (7), in which the first recording layer contains a polycarbonate resin.
(9) The display medium according to any one of (1) to (8), in which the first recording layer contains a photothermal conversion agent.
(10) The display medium according to any one of (1) to (9), in which the second recording layer contains a first leuco dye, a first developer, a first matrix resin, and a first photothermal conversion agent.
(11) The display medium according to (10), in which the first matrix resin includes a polycarbonate resin.
(12) The display medium according to any one of (1) to (11), further including:
   a third recording layer capable of performing recording with a third laser beam having a third peak wavelength; and
   a fourth recording layer capable of performing recording with a fourth laser beam having a fourth peak wavelength,
   in which the second recording layer, the third recording layer, and the fourth recording layer employ the same recording method.
(13) The display medium according to (12), in which the third peak wavelength and the fourth peak wavelength are less than 1,000 nm.
(14) The display medium according to (12) or (13), in which in a case where the first peak wavelength, the second peak wavelength, the third peak wavelength, and the fourth peak wavelength are denoted by λ₁, λ₂, λ₃, and λ₄, respectively, λ₁, λ₂, λ₃, and λ₄ satisfy a relation of λ₄ < λ₃ < λ₂ < λ₁.
(15) The display medium according to any one of (12) to (14),
   in which the third recording layer contains a second leuco dye, a second developer, a second matrix resin, and a second photothermal conversion agent, and
   the fourth recording layer contains a third leuco dye, a third developer, a third matrix resin, and a third photothermal conversion agent.
(16) The display medium according to (15), in which the second matrix resin and the third matrix resin include a polycarbonate resin.
(17) A laminate including:
   the display medium according to any one of (1) to (16) .

### <4 Example and Reference Example>

Now, the present disclosure is specifically described by an example and a reference example, but the present disclosure is not limited to these example and reference example. Note that, in the following example and reference example, parts corresponding to those of the laminate 20 according to the first embodiment are denoted by identical reference signs.

### [Example 1]

FIG. 13 is a sectional view of the laminate 20 according to Example 1. A laser marking sheet (polycarbonate sheet) is used as the recording layer 25RE. As the color display section 10, there is used a full-color laser drawing sheet in which the following are laminated in sequence: the base material 11, the intermediate layer 12A, the recording layer 13A capable of developing a cyan color, the intermediate layer 12B, the recording layer 13B capable of developing a magenta color, the intermediate layer 12C, the recording layer 13C capable of developing a yellow color, the intermediate layer 12D, and the cover layer 14.

In the laminate 20 according to Example 1, laser beams L₁₁ and L₁₂ used for drawing on the recording layer 25RE and the color display section 10 are as follows.

Laser beam L₁₁ for drawing on recording layer 25RE: laser beam with peak wavelength λ₁ = 1,064 nm

Laser beam L₁₂ for drawing on color display section 10: near-infrared laser beam with peak wavelength λ₂, λ₃, or λ₄ (λ₄ < λ₃ < λ₂ < 1,000 nm)

### [Reference Example 1]

FIG. 14 is a sectional view of a laminate 120 according to Reference Example 1. A laser marking sheet (polycarbonate sheet) is used as the recording layer 25RE. A general full-color laser drawing sheet is used as the color display section 110.

In the laminate 120 according to Reference Example 1, laser beams L₂₁ and L₂₂ used for drawing on the recording layer 25RE and the color display section 110 are as follows.
Laser beam L₂₁ for drawing on recording layer 25RE: laser beam with peak wavelength λ₁ = 1,064 nm
Laser beam L₂₂ for drawing on color display section 110: laser beam with peak wavelength λ₁ = 1,064 nm

Table 1 illustrates the drawing states of the laminate 20 according to Example 1 and the laminate 120 according to Reference Example 1.

**[Table 1]**

| | Member | | When drawing on recording layer 25RE is performed | | When drawing on color display sections 10 and 110 is performed | |
|---|---|---|---|---|---|---|
| | Recording layer 25RE | Color display sections 10 and 110 | State of recording layer 25RE | States of color display sections 10 and 110 | State of recording layer 25RE | States of color display sections 10 and 110 |
| Example 1 | Laser marking sheet | Full-color laser drawing sheet using leuco dye | Color is developed | No color is developed | No color is developed | Color is developed |
| Reference Example 1 | Laser marking sheet | General full-color laser drawing sheet | Color is developed | Color is developed | Color is developed | Color is developed with laser beam equal to or more than defined power |
| | | | | | | No color is developed with laser beam less than defined power |

In the laminate 20, in a case where drawing on the recording layer 25RE is performed with a laser beam, the color display section 10 located below the recording layer 25RE is not subjected to drawing.

In the laminate 20, in a case where drawing on the color display section 10 is performed with a laser beam, the recording layer 25RE located above the color display section 10 is not subjected to drawing.

In the laminate 120, in a case where drawing on the recording layer 25RE is performed with a laser beam, the color display section 10 located below the recording layer 25RE is also subjected to drawing simultaneously.

In the laminate 20, when it is attempted to perform drawing on the color display section 110 with a laser beam less than the defined power value, the recording layer 25RE located above the color display section 10 is unintentionally subjected to drawing, and the color display section 110 cannot be subjected to drawing as the drawn image on the recording layer 25RE acts as a mask. Meanwhile, when it is attempted to perform drawing on the color display section 110 with a laser beam equal to or more than the defined power value, the recording layer 25RE located above the color display section 10 is unintentionally subjected to drawing, but the color display section 110 can still be subjected to drawing. However, it is difficult to visually recognize the drawn image on the color display section 110 as the drawn image on the recording layer 25RE acts as a mask.

### [Reference Signs List]

10, 10A: Color display section
11: Base material
12A, 12B, 12C, 12D: Intermediate layer
12A₁, 12B₁, 12C₁, 12D₁: Adhesive layer
12A₂, 12B₂, 12C₂, 12D₂: Ultraviolet curable resin layer
13A, 13B, 13C, 13D: Recording layer
14: Cover layer
21: Base material
22: Display medium
23: Under layer
23RE: Recording layer
24: Intermediate layer
24HL: Accommodation section
24RE: Recording layer
25: Resin layer
25RE: Recording layer

## Claims

1. A display medium comprising:
a first recording layer capable of performing recording with a first laser beam having a first peak wavelength; and
a second recording layer capable of performing recording with a second laser beam having a second peak wavelength,
wherein the first recording layer and the second recording layer employ different recording methods.

2. The display medium according to claim 1, wherein the first peak wavelength is 1,000 nm or more.

3. The display medium according to claim 1, wherein the second peak wavelength is less than 1,000 nm.

4. The display medium according to claim 1, wherein the first recording layer is provided above the second recording layer.

5. The display medium according to claim 1, wherein the first recording layer is provided below the second recording layer.

6. The display medium according to claim 1, wherein the first recording layer and the second recording layer are arranged in an in-plane direction of the display medium.

7. The display medium according to claim 1, wherein the first recording layer is provided above the second recording layer, below the second recording layer, and on a side of the second recording layer.

8. The display medium according to claim 1, wherein the first recording layer contains a polycarbonate resin.

9. The display medium according to claim 1, wherein the first recording layer contains a photothermal conversion agent.

10. The display medium according to claim 1, wherein the second recording layer contains a first leuco dye, a first developer, a first matrix resin, and a first photothermal conversion agent.

11. The display medium according to claim 10, wherein the first matrix resin includes a polycarbonate resin.

12. The display medium according to claim 1, further comprising:
a third recording layer capable of performing recording with a third laser beam having a third peak wavelength; and
a fourth recording layer capable of performing recording with a fourth laser beam having a fourth peak wavelength,
wherein the second recording layer, the third recording layer, and the fourth recording layer employ a same recording method.

13. The display medium according to claim 12, wherein the third peak wavelength and the fourth peak wavelength are less than 1,000 nm.

14. The display medium according to claim 12, wherein in a case where the first peak wavelength, the second peak wavelength, the third peak wavelength, and the fourth peak wavelength are denoted by λ₁, λ₂, λ₃, and λ₄, respectively, λ₁, λ₂, λ₃, and λ₄ satisfy a relation of λ₄ < λ₃ < λ₂ < λ₁.

15. The display medium according to claim 12,
wherein the third recording layer contains a second leuco dye, a second developer, a second matrix resin, and a second photothermal conversion agent, and
the fourth recording layer contains a third leuco dye, a third developer, a third matrix resin, and a third photothermal conversion agent.

16. The display medium according to claim 15, wherein the second matrix resin and the third matrix resin include a polycarbonate resin.

17. A laminate comprising:
the display medium according to claim 1.
